# EUROPEAN PATENT SPECIFICATION

(11) **EP 0 269 370 B1**
(45) Date of publication and mention of the grant of the patent: **31.01.1996**
(21) Application number: 87310226.3
(22) Date of filing: 19.11.1987
(51) Int. Cl.: G06F 13/18, G06F 15/16

(54) **Memory access controller**
Speicherzugriffsteuerung
Circuit de commande pour accès en mémoire

(30) Priority: 21.11.1986 JP 276859/86
(43) Date of publication of application: 01.06.1988
(73) Proprietor: Oki Electric Industry Company, Limited, Tokyo 105 (JP)
(72) Inventor: Kishino, Kuniaki, Minato-ku Tokyo 105 (JP); Abe, Minoru, Minato-ku Tokyo 105 (JP); Taguchi, Hiroshi, Minato-ku Tokyo 105 (JP)
(74) Representative: Boydell, John Christopher

(56) References cited:
- WO-A-82/01777
- US-A- 4 130 864
- US-A- 4 449 183
- US-A- 4 698 753
- PATENT ABSTRACTS OF JAPAN vol. 6, no. 62 (P-111)(940) 21 April 1982
- PATENT ABSTRACTS OF JAPAN vol. 8, no. 89 (P-270)(1526) 24 April 1984, & JP-A- 59 5371

## Description

The present invention relates to a memory information transfer unit for transferring associated information from one processing unit to another.

Many information processing units transfer information from one thereamong to another or inversely receive the same in the same manner. In this case, each processing unit is needed to execute another operation without interruption during the carrying out of such information transfer or reception. For this purpose, there are conventionally known the following processing units:
(a) those adapted to effect transmission and reception as well as processings therein by means of time sharing from the beginning;
(b) those adapted to wait and effect information transmission and reception when there is no requirement for processing in themselves; and
(c) those adapted to transfer information written in an area of memory to another unit by using a data channel device and at a time when they do not access the memory.

However, processing units arranged as described above take much time in internal processing, or require complicated external control apparatus. In addition, where a large amount of information is to be transferred, much transfer time is needed from the start to the end of the transfer.

From US-A-4130864 there is known a data processing system in which a common memory is shared by a plurality of processors which access the memory via respective communications channels. The individual communications channels have a predetermined order of access to the memory, under the control of a priority selection circuit which allocates a priority from highest to lowest to the different communications channels.

From US-A-4 698 753 a single chip device is known for interfacing two processors to be connected to a selectively accessible memory. Acess is given on a first-come first-served basis. The described single chip device is provided with an arbitration letch having a bistable device the state of which determines which processor has access to the memory in case of simultaneous access requests : this ensures that only one processor has access to the memory at any time.

In view of the drawbacks of the prior art, the present invention seeks to provide a memory access controller for controlling information transfer from a certain processing unit among a plurality of processing units to another with use of the same memory and which is capable of processing for transmission and reception over a short period of time with ease as well as permitting other processing even during transmission and reception.

In accordance with the invention there is provided a memory access controller associated with a plurality of processing units and equipped with memory means for the common use of said processing units, said memory means being employed when one of said processing units transfers associated information to another of said processing units for writing any information in said memory means and for informing the destination processing unit of the completion of the write operation to thereby permit said destination processing unit to read from said memory means said information so transferred, said controller being characterised by:
(a) clock means operable to generate a timing pulse signal for setting a periodical access time interval during which write and read operations in and from said memory means are executed;
(b) selection means for successively selecting the processing units one at a time on the basis of which processing unit issues a write or read request earlier than the other processing unit(s);
(c) an access timing setting section receiving said timing pulse signal, and the output from said selection means, to thereby synchronise the selected access request with said timing pulse signal;
(d) means for granting access to the memory means, by that processing unit which has been selected, during said access timing interval set by the timing signal; and
(e) means for permitting the memory access controller to inform said processing unit when it is in the course of execution of the request from said processing unit.

In order that the invention may be better understood an embodiment thereof will now be described by way of example only and with reference to the accompanying drawings in which:-
Figure 1 is a circuit block diagram of an embodiment of a memory access controller according to the present invention;
Figure 2 is an illustration showing the arrangement of the buffer memory;
Figure 3 is a timing chart of a write operation in the embodiment of Figure 1;
Figure 4 is a timing chart of a read operation in the embodiment of Figure 1;
Figure 5 is a timing chart of a write operation when preceding access instruction takes preference;
Figure 6 is a timing chart of a read operation of Figure 5 when preceding access instruction takes preference;
Figure 7 is a timing chart of a write operation when a port P1 takes preference; and
Figure 8 is a timing chart of an exceptional read operation when the port P₁ takes preference.

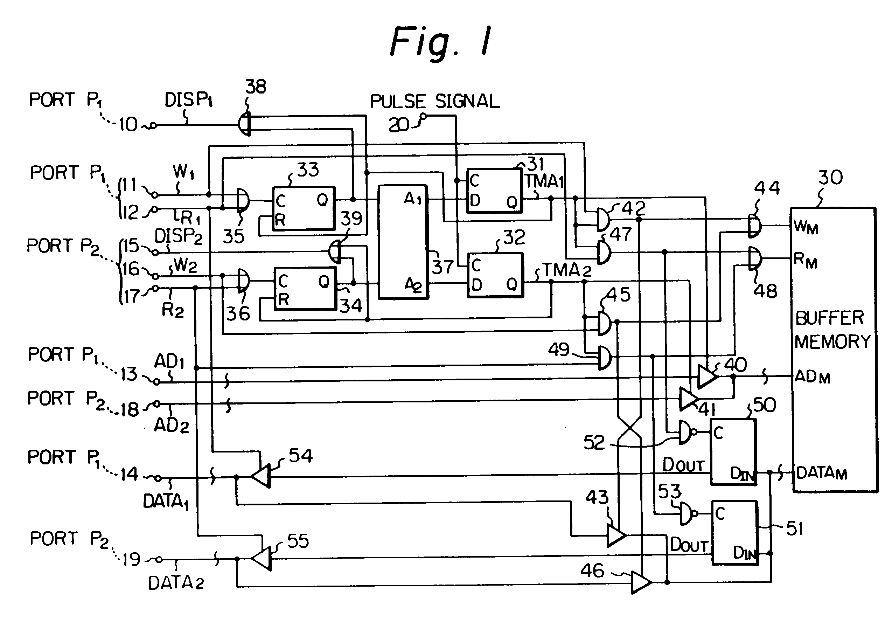

Figure 1 is a circuit block diagram of an embodiment of a memory access controller according to the present invention.

As the figure shows, the apparatus includes a plurality of processing units (not shown, and hereinafter referred to as units), which mutually transfer information, include respectively ports to which symbols P₁ and P₂ are assigned and possessed by respective signals as designations thereof.

Although the description here employs two processing units for brevity, the present invention is not limited thereto.

In addition, although a plurality of terminals are actually provided for each of signal terminals 13, 14, 18 and 19, and for address and data bus signal terminals of a buffer memory 30, they will hereafter be represented by single terminals, as the figure shows.

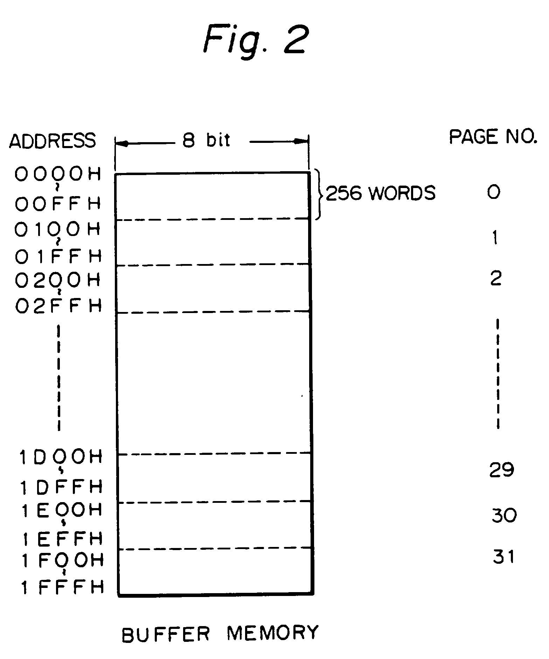

The buffer memory 30 can write therein and read therefrom information on the basis of write and read requests from the respective ports P1 and P2. Figure 2 is an illustration showing the configuration of an embodiment of the buffer memory 30. The buffer memory 30, a general purpose type of 8K words X 8 bits, comprises a total of 32 pages from No. 0 to No. 31. Each page includes 256 words, and each address is given in hexadecimal notation 0000 to 1FFF. High order 5 bits and low order 8 bits respectively correspond to the page number and the address number in each page. Those high order 5 bits are employed for specification of the buffer memory upon mutual information transfer between the ports P₁ and P₂.

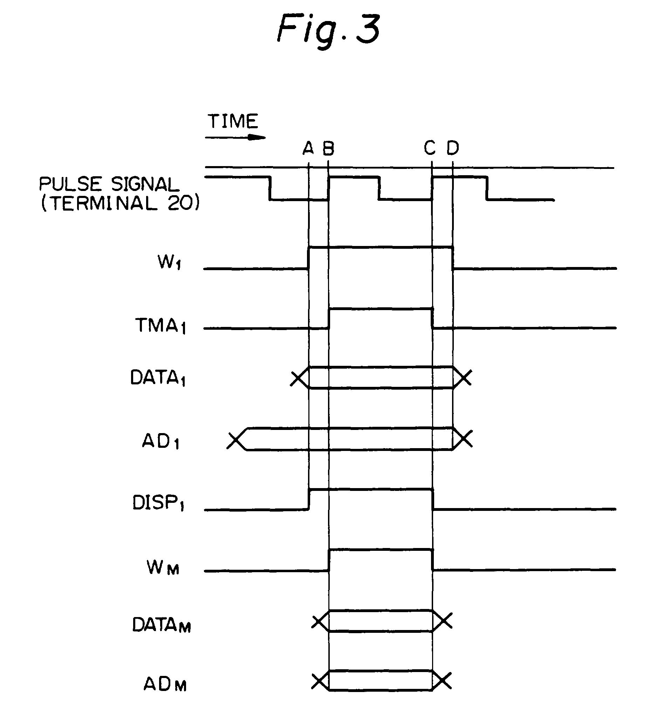

Access timing setting sections 1 and 2, respectively designated at 31 and 32, receive a pulse signal from a timing signal generator (not shown) via a pulse signal terminal 20 at predetermined time instants B, C, E and so on, as shown in the timing charts of Figures 3 to 8. The access timing setting section 31 or 32, when kept at a high level (hereinafter referred to as "H") at an input D thereof, issues "H" access timing signals TMA₁ and TMA₂ at an output Q thereof until their reception of the next pulse signal.

Access request latch sections 1 and 2 are respectively designated at 33 and 34.

When either of a P₁ write signal (a write request signal from the port P₁) on terminal 11 and a P₁ read signal (a read request signal from the port P₁) on terminal 12 changes to "H", the access request latch section 1, designated at 33, changes its input C to "H" via an OR gate 35, and changes its output Q to "H" by the positive edge thereof. In the same fashion, when either of a P₂ write signal on terminal 16 and a P₂ read signal on terminal 17 changes to "H", the access request latch section 2, designated at 34, changes its input C to "H" via an OR gate 36, and changes its output Q to "H" by the positive edge thereof.

An access port selector section, designated at 37, identifies a signal level at the output Q of each of the access request latch sections 33 and 34, and changes only one of its outputs A₁ and A₂ on the basis of a predetermined selection reference described later before the pulse signal at the pulse signal terminal 20 becomes "H".

Each of the access timing setting sections 31 and 32 sample the signal at its input D with the positive edge at the time instant C to provide the output Q, and maintain that state until the positive edge of the pulse signal at the next time instant C.

The access request latch sections 33 and 34, when the output Q of each of the access timing setting parts 31 and 32 becomes "H", input the positive edge thereof through their reset terminals R and are thereby reset.

An OR gate 38 changes a P₁ in-access display signal on terminal 10 to "H" as the port P₁ being in access while the access request latch section 1, designated at 33 or the access timing setting section 1, designated at 31 stays at "H" at their outputs Q, and indicates to the unit P₁ that the port P₁ is in communication with the buffer memory.

Likewise, an OR gate 39 changes a P₂ in-access display signal on terminal 15 to "H" as the port P₂ being in access while the access request latch section 2, designated at 34 or the access timing setting section 2, designated at 32, stays at "H" at their outputs Q, and indicates to the P₂ unit that the port P₂ is in communication with the buffer memory.

A tri-state buffer 40 (although a plurality of tri-state buffers of the same type are employed, a single tri-state buffer is here depicted instead thereof for brevity.) outputs P₁ address signals 13 as address signals AD_{M} of the buffer memory 30 when the access timing setting section 1, designated at 31, has its output Q at "H". Likewise, a tri-state buffer 41 (although a plurality of tri-state buffers are actually employed as in the case of the tri-state buffer 40, a single tri-state buffer is here depicted instead thereof for brevity.) outputs a P₂ address signal 18 as the address signal AD_{M} of the buffer memory 30 when the access timing setting section 2, designated at 32, has its output Q at "H".

An AND gate 42 becomes "H" when the P₁ write signal terminal 11 is at "H" and the access timing setting section 1, designated at 31, has its output Q maintained at "H".

When the output of the AND gate 42 is at "H", information at the P₁ data bus signal terminal 14 is passed to the buffer memory 30 as a data bus signal DATA_{M} via the tri-state buffer 43. Simultaneously, the AND gate 42 provides a write signal W_{M} to the buffer memory 30 via an OR gate 44, and writes the content of the data bus signal DATA_{M} in the buffer memory 30 at that time at a specified address AD_{M} thereof.

An AND gate 45 likewise becomes "H" when a P₂ write signal terminal 16 is at "H" and the access timing setting section 2, designated at 32, has its output Q maintained at "H".

When the output of the AND gate 45 is at "H", information at the P₂ data bus signal terminal 19 is passed to the buffer memory 30 as a data bus signal DATA_{M} via a tri-state buffer 46. The AND gate 45 simultaneously provides a write signal W_{M} to the buffer memory 30 via an OR gate 44, to thereby write the content of the data bus signal DATA_{M} of the buffer memory 30 at that time in the buffer memory 30 at a specified address AD_{M} thereof.

The output of an AND gate 47 changes to "H" when the P1 read signal terminal 12 is at "H" and the access timing setting section 1, designated at 31, has its output Q at "H".

The AND gate 47, once becoming "H", provides an output enable signal R_{M} to the buffer memory 30 via an OR gate 48. Thereupon, the operation provides in the same manner as in the write operation described previously, the information at the P₁ address signal terminal 13 as the address signal AD_{M} of the buffer memory 30 via the tri-state buffer 40 in order to enable the word content in the buffer memory 30 at the address AD_{M} to be read.

Likewise, the output of an AND gate 49 changes to "H" when a P₂ read signal terminal 17 is at "H" and the access timing setting section 2, designated at 32, has its output Q at "H".

The AND gate 49, once becoming "H", provides an output enable signal R_{M} to the buffer memory 30 via an OR gate 48. Thereupon, this enables information at the P₂ address signal terminal 18 to be provided as the address signal AD_{M} of the buffer memory 30 via the tri-state buffer 41 whereby the word content in the buffer memory 30 at the address AD_{M} thereof may be read.

Data latch sections 1 and 2, designated at 50 and 51 and employed upon each read operation, receive the data bus signal read from the buffer memory 30 at their respective input terminals D_{IN}. The respective data latch sections 1 and 2, designated at 50 and 51, receive a latch timing by driving the inverters 52 and 53 with the negative edges of the outputs from the AND gates 47 and 49 to latch the content of the data bus signal, and output that data bus signal DATA_{M} from the output terminals D_{OUT}.

Buffers 54 and 55 feed data at the output terminals D_{OUT} of the respective data latch sections 50 and 51 to the terminals 14 and 19 respectively as the P₁ data bus signal and the P₂ data bus signal when the P₁ and P₂ read signal terminals 12 and 17 are respectively at "H".

In succession, the operation of the embodiment of Figure 1 will now be described.

Figure 3 is a timing chart of the write operation corresponding to the transfer of information from the port P1 unit to the buffer memory 30.

First, when the P₁ unit issues the P₁ write signal at the time instant A in Figure 3, the P₁ write signal terminal 11 of Figure 1 (W₁ of Figure 3) becomes "H".

Slightly thereafter, the access request latch section 1, designated at 33, changes its output Q to "H" to cause the P₁ in-access display signal terminal 10 (DISP₁) to become "H", whereby the memory access controller displays that the P₁ unit is in access. The access port selection section 37 changes its output A₁ to "H" owing to the access request latch section 1, designated at 33, becoming "H" at its output Q.

The access timing setting section 1, designated at 31, has its input terminal D becoming "H", and receives a pulse signal at its pulse signal terminal 20 at the time instant of B to cause TMA₁, the access timing signal at its output Q, to become "H". The write signal W_{M} of the buffer memory 30 becomes "H" as receiving the access timing signal. Then, information (ADI) at the P₁ address signal terminal 13 involving the page number as the address signal of the buffer memory is provided as the address signal AD_{M} of the buffer memory 30. In addition, the information (DATA₁) at the P₁ data bus signal terminal 14 as transfer data is provided as the data bus signal DATA_{M} of the buffer memory 30.

With the passage of a predetermined access period (the period from the time instant B to C of Figure 3), the access timing signal TMA₁ changes to "L" to result in the end of the information write operation.

The port P₁ unit confirms the end of the write operation based upon the DISP1 signal becoming "L" at the time instant C, and thereby changes the P₁ write signal W₁ to "L" at the time instant D.

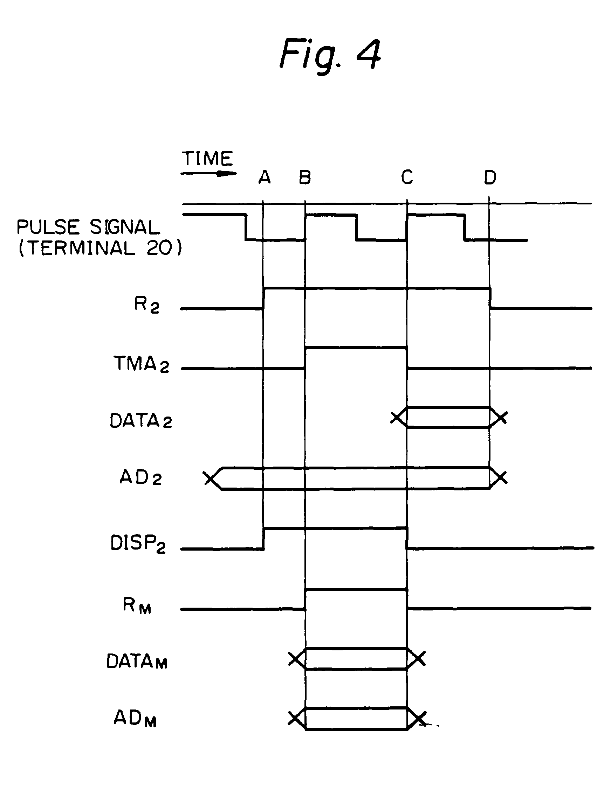

Figure 4 is a timing chart showing the procedure when the port P₂ unit reads the associated information stored in the buffer memory 30. First, once the P₂ unit issues the P₂ read signal at the time instant A of Figure 4, the terminal 17 of Figure 1 (R₂ of Figure 4) becomes "H". Immediately thereafter, the access request latch section 2, designated at 34, becomes "H" at its output with the P₂ in-access display signal terminal 15 (DISP₂) becoming "H", whereby the memory access controller indicates the P₂ unit to be in access. The access port selection section 37 changes to "H" at its output A₂ in response to the access request latch section 2, designated at 34, becoming "H" at its output Q.

The output timing setting part 2, designated at 32, permits the access timing signal TMA₂ at its output Q to become "H" at the time instant B of Figure 4. As a result, the buffer memory 30 permits the output enable signal R_{M} thereat to become "H".

In succession, the information (AD₂) at the P₂ address signal terminal 18 for addressing the buffer memory 30 is provided as the address signal AD_{M} of the buffer memory 30. The data latch section 2, designated at 51, receives the information (DATA_{M}) read from an address specified by the P₂ address signal AD₂.

The access timing signal TMA₂ becomes "L" at the time instant C, and hence the information read operation from the buffer memory 30 is completed and the P₂ in-access display signal DISP₂ becomes "L". Simultaneously, the data latch section 2, designated at 51, latches the aforementioned read data bus signal DATA_{M} and transfers the same as the P₂ data bus signal DATA₂ from the terminal 19 to the P₂ unit. The fact of the DISP₂ signal becoming "L" indicates that the P₂ data bus signal DATA₂ has thereon effectively transmitted the read data.

The port P₂ unit, upon reading that transmitted read data, changes the P₂ read signal to "L" at the time instant D to complete the read operation from the memory.

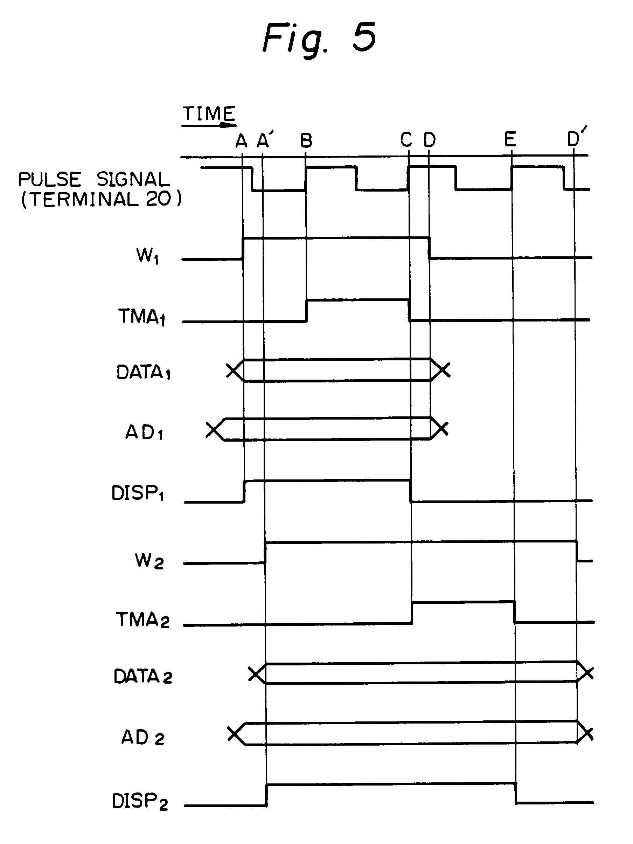

Figure 5 is a timing chart for a write operation in which a processing unit, which issues an access instruction earlier than the other processing units, is assumed to get priority. Description of each signal on the side of the buffer memory 30 will be omitted here. A situation is illustrated here in which the P₁ write signal W₁ becomes "H" at the time instant A of the same figure, and successively the P₂ write signal W₂ becomes "H" at the time instant A', and then the access timing setting sections 31 and 32 receive a pulse signal at their input terminals C from the pulse signal terminal 20.

The access request latch sections 33 and 34 respectively become "H" at their outputs Q at the time instants A and A' to result in both of the signal DISP at the P₁ in-access display signal terminal 10 and the signal DISP₂ at the P2 in-access display signal terminal 15 becoming "H".

The access port selection section 37 changes to "H" at its output A₁ before the time instant B in response to the P₁ write signal W₁ issued previous to the P₂ write signal W₂.

As a result, the access timing setting section 1, designated at 31, receives the pulse signal from the pulse signal terminal 20 at the time instant B and issues the access timing signal TMA₁. In response to signal TMA₁ becoming "H", the access request latcn section 1, designated at 33, changes to "L" at its output Q. The access port selection section 37 changes to "L" at its output A₁ and to "H" at its output A₂ before the time instant C. Thereafter, the access timing setting section 2, designated at 32, receives the pulse signal from the pulse signal terminal 20 at the time instant C to change the TMA₂ to "H".

For the write operation in the buffer memory 30, the P₁ data bus signal DATA₁ is written at an address specified by the AD₁ in the period of the access timing TMA₁ Kept at "H", in the same manner as in the timing chart of Figure 3. Likewise, the P₂ data bus signal DATA₂ is written in the buffer memory 30 at an address specified by the AD₂ during the period in which the access timing TMA₂ is kept at "H". These write operations are completed respectively at the time instants D and D'.

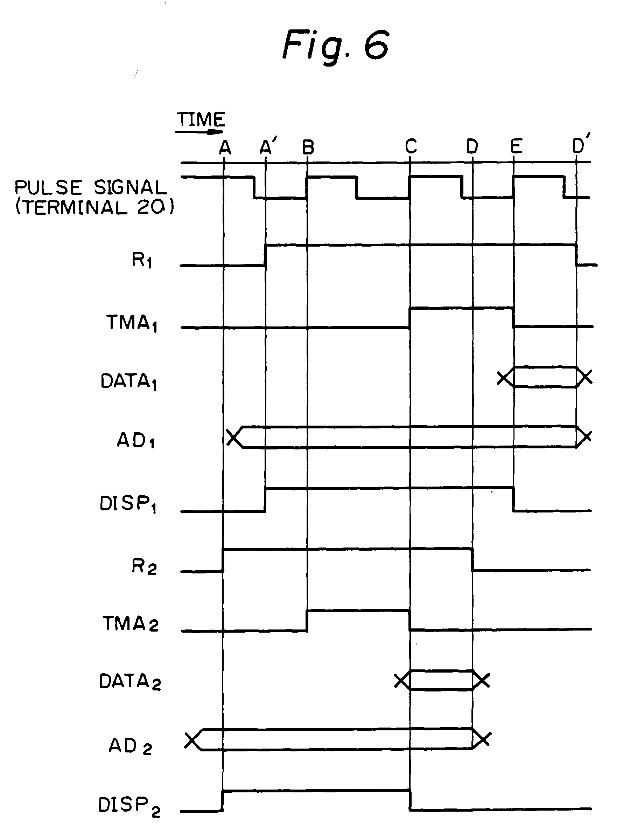

Figure 6 is a timing chart for the read operation in a situation where a processing unit, which issues an access instruction earlier than the other processing units, takes precedence. In this case, the P₂ read signal R₂ precedes the P₁ read signal R₁. The buffer memory 30 permits data at an address specified by the P₂ address signal AD₂ to be read therefrom during the period in which the access timing signal TMA₂ is kept at "H", and the data latch section 2, designated at 51, latches the data involved in the data bus signal DATA_{M} at the time instant C.

Likewise, the buffer memory 30 permits data at an address specified by the P₁ address signal AD₁ to be read therefrom during the period in which the access timing sigl TMA₁ is kept at "H", and the data latch section 1, designated at 50, latches the data involved in the data bus signal DATA_{M} at the time instant E.

The operation thereafter proceeds in the same fashion as in Figure 4. That is, the respective data latch sections transmit data latched therein as the P₂X data bus signal DATA₂ and the P₁ data bus signal DATA₁ via the tri-state buffers 55 and 54.

There has been described a relatively simplified memory access controller which can be constructed with use of a general-purpose memory. Furthermore, the access controller can be accessed from a plurality of processing units simultaneously.

## Claims

1. A memory access controller associated with a plurality of processing units and equipped with memory means (30) for the common use of said processing units, said memory means (30) being employed when one of said processing units transfers associated information to another of said processing units for writing any information in said memory means and for informing the destination processing unit of the completion of the write operation to thereby permit said destination processing unit to read from said memory means said information so transferred, said controller being characterised by:
(a) clock means operable to generate a timing pulse signal (20) for setting a periodical access time interval during which write and read operations in and from said memory means (30) are executed;
(b) selection means (37) for successively selecting the processing units one at a time on the basis of which processing unit issues a write or read request earlier than the other processing unit(s);
(c) an access timing setting section (31,32) receiving said timing pulse signal, and the output from said selection means (37), to thereby synchronise the selected access request with said timing pulse signal;
(d) means (40,41,42,43,45,46,49) for granting access to the memory means (30), by that processing unit which has been selected, during said access timing interval set by the timing signal; and
(e) means (38,39) for permitting the memory access controller to inform said processing unit when it is in the course of execution of the request from said processing unit.

## Patentansprüche

1. Speicherzugriffs-Steuervorrichtung, die mit einer Vielzahl von Verarbeitungseinheiten verbunden und mit einer Speichereinrichtung (30) zur gemeinsamen Verwendung der Verarbeitungseinheiten ausgerüstet ist, wobei die Speichereinrichtung (30) dann eingesetzt wird, wenn eine der Verarbeitungseinheiten zugehörige Informationen an eine andere Verarbeitungseinheit überträgt, um alle Informationen in die Speichereinrichtung zu schreiben, die Bestimmungs-Verarbeitungseinheit vom Abschluß der Schreiboperation zu informieren und es der Bestimmungs-Verarbeitungseinheit dadurch zu ermöglichen, die auf diese Weise übertragenen Informationen aus der Speichereinrichtung zu lesen, wobei die Steuervorrichtung gekennzeichnet ist durch:
(a) eine Takteinrichtung, die dazu dient, ein Takt-lmpulssignal (20) zu erzeugen, um ein periodisches Zugriffs-Zeitintervall einzustellen, während dem Schreib- und Leseoperationen in und von der Speichereinrichtung (30) durchgeführt werden;
(b) eine Auswahleinrichtung (37), um je nach dem, welche Verarbeitungseinheit früher als eine andere Verarbeitungseinheit (als andere Verarbeitungseinheiten) eine Schreib- oder Leseanforderung ausgibt, die Verarbeitungseinheiten eine nach der anderen aufeinanderfolgend auszuwählen;
(c) einen Zugriffstakt-Einstellbereich (31, 32), der das Takt-lmpulssignal sowie das Ausgangssignal von der Auswahleinrichtung (37) empfängt, um dadurch die ausgewählte Zugriffs-Anforderung mit dem Takt-lmpulssignal zu synchronisieren;
(d) eine Einrichtung (40, 41, 42, 43, 45, 46, 49), um der ausgewählten Verarbeitungseinheit während dem durch das Taktsignal eingestellte Zugriffstakt-Intervall Zugriff auf die Speichereinrichtung (30) zu gewähren; und
(e) eine Einrichtung (38, 39), die es der Speicherzugriffs-Steuervorrichtung ermöglicht, die Verarbeitungseinheit zu informieren, wenn die Einrichtung bei der Ausführung der Anforderung von der Verarbeitungseinheit ist.

## Revendications

1. Circuit de commande pour accès en mémoire associé à une pluralité d'unités de traitement et équipé d'un moyen de mémoire (30) pour l'utilisation commune desdites unités de traitement, ledit moyen de mémoire (30) étant utilisé lorsqu'une desdites unités de traitement transfère des informations associées vers une autre desdites unités de traitement pour écrire n'importe quelles informations dans ledit moyen de mémoire et pour informer l'unité de traitement de destination de la fin de l'opération d'écriture pour permettre de ce fait à ladite unité de traitement de destination de lire depuis ledit moyen de mémoire lesdites informations ainsi transférées, ledit circuit de commande étant caractérisé par :
(a) un moyen d'horloge fonctionnel pour produire un signal d'impulsion de synchronisation (20) pour fixer un intervalle de temps d'accès périodique durant lequel les opérations d'écriture et de lecture dans ledit moyen de mémoire (30) sont exécutées ;
(b) un moyen de sélection (37) pour sélectionner successivement les unités de traitement une par une sur la base duquel une unité de traitement émet une requête d'écriture ou de lecture avant la ou les autres unités de traitement ;
(c) une partie de réglage de la synchronisation d'accès (31, 32) recevant ledit signal d'impulsion de synchronisation, et la sortie dudit moyen de sélection (37), afin de synchroniser la requête d'accès sélectionnée avec ledit signal d'impulsion de synchronisation ;
(d) des moyens (40, 41, 42, 43, 45, 46, 49) pour attribuer l'accès au moyen de mémoire (30), par l'unité de traitement qui a été sélectionnée, lors dudit intervalle de synchronisation d'accès fixé par le signal de synchronisation ; et
(e) des moyens (38, 39) pour permettre au circuit de commande pour accès en mémoire d'informer ladite unité de traitement qu'il est en cours d'exécution de la requête de ladite unité de traitement.
